# EUROPEAN PATENT APPLICATION

(11) **EP 3 876 178 A1**
(43) Date of publication of application: **08.09.2021**
(21) Application number: 21169926.9
(22) Date of filing: 30.06.2015
(51) Int. Cl.: G06Q 30/04, G06Q 40/00, G06Q 40/02, G06Q 10/06, G06Q 10/10, G06Q 20/10, G06F 17/40, G06F 21/62

(54) **IMPROVED SYSTEM AND METHOD FOR AUTOMATED COLLECTIONS OF DEBTS FOR BUSINESSES**

(30) Priority: 30.06.2014 US 201461998577 P
(62) Divisional of application: 15819683.2
(71) Applicant: Shaaban, Ahmed, Chicago, IL 60601 (US); Thandra, Venkat, Chicago IL 60601 (US)
(72) Inventor: Shaaban, Ahmed, Chicago, IL 60601 (US); Thandra, Venkat, Chicago IL 60601 (US)
(74) Representative: Cabinet Beaumont

(57) **Abstract**

The present invention consists of an improved Billing and Collections system wherein the company or firm may create an online account and the usermay select one or more of the following: language forbilling, currency desired for payment, an exchange rate table preferred by the user for foreign currency payments and the amount and manner of late payment reminders, namely, whether by phone, fax, text or email. The system can automatically send out dunning communications after preselected periods of time and by preselected methods chosen by the firm or company. The system may automatically allocate payments to various accounting and taxcategories.

## Description

### Priority Claim

The present application herewith claims priority of Provisional App. No. 61/998,577, which was filed June 30, 2014, and shall be considered as if fully set forth herein.

### Field of the Invention

The present invention relates to the field of automated collecting of billed time and disbursements to clients, and especially those in the professional services marketplace.

### Background of the Invention

In the current marketplace, there are a variety of computerized time and billing systems for professional firms which are marketed under the following Trademarks: Timeslips by Sage, BillQuick, Clio and others. Some of these systems are computer based while others operate primarily in a cloud computing environment. These systems, however, are not suited to large law firms and professional firms having a global presence, with multiple offices in a plurality of countries which must be linked together for proper billing and financial management. In addition, these are basic programs which do not contain the most up to date features such as transmissions by text, email, fax, computer voice calling, and social media announcements and billing. Other numerous and varied disclosures related to billing and timekeeping are also disclosed in the prior art as shown below.

EP 1,145,162 issued to Ashby discloses the use of a System for processing credit applications, financial and insurance services and administrative and management tools. The System will generate a price quote for insurance and finance and facilitate on line credit application processing. It will further provide detailed reports for finance, insurance inventory, tracking and other administrative matters. It will provide quick quotes for a lease or loan. It will also perform: inventory tracking, insurance tracking, purchase tracking, applicant profiling, targeted marketing, customer satisfaction, etc. The system will collect data for credit, a description of the item being sold, insurance will be offered for the item, licensing and data required for the government will be collected.

Ashby also discloses that the User can be a financial institution, a dealer, manufacturer, insurer or supplier. It can utilize and store credit agreements with customer ratings and interest rates which can be bundled and sold on a public exchange. FAQ's can be provided in the system, and it can provide Quick Quotes on the spot to the consumer. However, this disclosure is directed to car sales and insurance, not timekeeping. The terms it stores are contract terms, contract ID, customer ID, buy rate, the sales rate, dealer markup, payments, cash down, trade in value, lease fee, monthly payments, commission and taxes due. However, Ashby does not relate to professional timekeeping or billing.

EP Patent No. 1,769,452 issued to Allin discloses the use of a computerized system for residential and commercial construction projects to maintain and disburse construction draws during construction. It can track lien waivers, and can prepare, approve, sign and distribute hundreds of checks to subcontractors each month. It also tracks construction change orders. It can manage all of the persons involved in each draw. It manages and generates a construction budget and time line. Italso manages payments to material suppliers. It can manage and store the inspection data for each project. It can manage budgets for GC's as well as the subs. It handles ACH payments. Template forms are utilized to facilitate the draw process. Notices can be sent by email, text orvoice.

EP Patent No. 2,026,222 issued to Alquier discloses the use of a system and method which allows the addition, modification and deletion of data base fields dynamically without the use of a data base administrator. The system allows the addition and modification of an informational structure dynamically distributed directly via the user interface. It supports different types of entity attributes including, text, numerical information, date ad time, predefined values and binary objects, allows the creation of relational dependencies between information entities (e.g., patent/child), provides flexible reporting capabilities including spreadsheets, slides, documents, timelines, etc.; it allows a configurable data entry interface; it allows importation of data from external sources; it allows full text searches; logs modifications for an audit trial (important for pharma and med devices); includes email notifications. It allows for a user interface that is flexible and configurable. The system uses template items, coding and tables to accomplish these purposes. However, it is not directed toward time tracking and billing generation.

U.S. Patent Disclosure No. 2003/0120538 filed by Boerke, et al. discloses the use of a method for tracking progress on a task by dividing the period of time into a plurality of timeslots and determining a target number of subtasks to be completed during each timeslot. For example, the time slots may be divided into 15 minute increments. The system only tracks the number of subtasks completed for each timeslot. The method also keeps track statistically of variances in subtasks completed between workers. The task may include any type of work. The process may be used for planning purposes, i.e., as a planning tool such that management can plan and process daily or monthly work shifts according to the work to be done for particular tasks and subtasks. This helps a supervisor spot and correct negative variances in worker performance. The progress can be logged into a computer or worksheet or in paper format. Problems are also noted by the method for correction to improve performance by variance cards.

U.S. Patent Disclosure No. 2013/00090968 filed by Borza, discloses the use of an employee management and scheduling method which is directed to ensure that adequate personnel are present as required and that statutory requirements are met and costs are tracked and minimized. The Borza disclosure is also directed at apps for management cell phone usage wherein managers can track employees, their shifts and their skills and managing same. This allows for real time changes by employees that are sick or have not shown up for work. The locations may also be tracked. Scheduling software is used to manage multiple employees at multiple locations. From one screen, a manager may create, edit and delete shifts and also have access to other aspects of managing the organization staffings with information about positions, teams, skills, etc. being provided. The System can print Shift Assignment Reports and Employee Reports. However, this disclosure is directed toward scheduling employees and not tracking their time or billing for their time.

U.S. Patent Disclosure No. 2012/0233044 filed by Burger, et al., discloses the use of a Method and System for labor project management and costing which may run on a cell phone app to monitor employee activity, identify faulty activity and manage allocation of labor resources. The app, as installed on an employee cellphone, allows the employee to travel to various job locations and record the activities ateach job location. The employee may log into or out of the timeclock app installed on the employee's cellphone. The system can be used to monitor managers and administrators as well as employees. The system can be used to transmit payroll information. A flag may be generated if the worker travels outside the permissible areas allocated to his role. The system stores employee photos, job locations, routes, job codes, SIC codes, etc. may be entered into the back end by an administrator. The system also generates reports, and has a "Dashboard" or summary report simply show who is on the job, what time they arrived and GPS confirmation of location. The LPM platform may also be operated in the Cloud.

U.S. Patent Disclosure No. 2014/0258057 filed by Chen discloses the use of a system and method for tracking the User's time of a mobile device for the purpose of billing clients. The system is provided with a digital timer which is launched at the time of arrival and then stopped when the employee leaves. The system is directed at tracking time on a mobile device or app. It tracks time sending texts and emails. Time is recorded as soon as the professional receives a voice mail, phone call, text oremail. The user can also input notes with the system's time recording and entry. The app automatically looks up in the user's contacts list whether the call or email or text coming in is from a client, and if so, it begins to track it for billing purposes. If not in the contacts registry, the user is alerted at the time and can add the contact as a client to be billed.

U.S. Patent Disclosure No. 2013/0290154 filed by Cherry, et al. discloses the use of the system and method to manage employees at a plurality ofjobsites by providing a database wherein a set of job site data is stored therein. Employee devices may collect a set of time punch data and photos to store in the system. Management apps are used on supervisory devices to monitor the job site data and employees and validate photos and activate employee apps. This system is shown operating on a Cloud environment. The app will operate with a web browser, WiFi or on GPS authentication. The system essentially operates as a time tracking system for job sites. The system stores time photos of the employees at check in and check out. The system also records a job number, a job phase and a cost code. The system also has a payroll calculator communicating with a payroll service.

U.S. Patent Disclosure No. 2001/0042032 filed by Chrawshaw discloses the use of a system for capturing, processing and reporting time and expense data which can include flat fee billing, maximum fee billing and will also allow for discounts and write offs. It can be used for a wide range of businesses. A client will not have access to internal data of the company. The system will produce bills, expense reports, time sheets, proposals and project tracking. This appears to be a conventional program for law firm data which is run on a local server for one location. The system may produce various reports as needed. Bills may be delivered by email. The program will create envelopes for the bills. The system will also create budgets for the client.

US Pat. No. 6,038,547 issued to Casto discloses the use of a construction tracking and payment system for use by contractors and subcontractors so that work may be tracked and payment may be timely made after the work is completed and inspections performed. The system complies with AIA requirements. The system may be implemented on a handheld computer. The system will break down a construction job into various elements, and then a contractor or subcontractor will be given a copy of how the site is partitioned, then each contractor or sub is responsible for submitting applications using the partitioning to ensure uniformity the architect desires to impose. The system can import and use CAD information on the job site. The system uses coding approved by the AIA.

US Pat. No. 6,747,679 issued to Finch, II, et al. discloses the use of a time keeping and expense tracking server including a server that implements computer instructions that define logic for building GUI screens according to user instructions. The user can implement and design the screens needed for the tasks of time keeping and expense tracking. The system may be implemented on the Cloud or Internet with a laptop or wireless device desired. The GUI screen may be customized on a company by company basis, a department by department basis, etc. The system also includes security wherein projects and project codes are only viewable by certain level employees.

US Pat. No. 7,343,316 issued to Goto, et al. discloses the use of a network based shift scheduling system for generating temporary shift workers. It is sent over portable terminals over a network. The system is set to secure and provide work for a plurality of workers. Workers can also submit cancellations or shift changes via the system. The system also accommodates email for communication purposes. The system may also recruit new employees. The system stores the name, age, sex address, mail address and qualifications of the employee, the workable time slots, the type of job, hourly wage, etc.

WPO 2014/016796 filed by Gupta, et al. discloses the use of a system and method for employee tracking in a mobile communication device wherein dynamic location reports may be generated in real time or near real time. The system is directed to door to door delivery or pickup sales forces. The System uses a mobile app on the employees cellphone to conduct the tracking of the employee. The system will raise flags if deviations from tracking occur. The system uses Blue Dophil software to analyze where employees should be performing tasks and produces flags when parameters gathered fall outside permissible ranges. These flags are sent to management via text or email.

US Pat. No. 6,832,176 issued to Hartigan, et al. discloses the use of a method and system for tracking and reporting time spent on tasks in different application on the end users' computers while the tasks are being performed. It may track the opening and closing of files automatically and send reports and messages directly to and from other applications. The software may also suggest categories for each task based upon at least one criteria. The system may use MS Outlook for assistance in tracking tasks and transmitting reports. It is directed toward attorneys and accountants. The system may track fixed fees and use data collected for evaluating production or sweat equity bonuses to employees. The system may track a plurality of projects or research endeavors. It can track the time spent by accountants on spreadsheets. It can track the time engineers spend on designing computer code or simulating circuit designs, etc. It mentions the use of Timeslips for professional time tracking and TABS ₁₁ for tracking other professional time spent on tasks and projects. The system tracks time on computers used by the professionals involved. The system presents toolbars to assist in tracking time. The system will track time spent in applications such as MS Word, Excel, Outlook, Power Point, etc. It will track when the application is open, active and then closed. It can score and rate the usage of these various types of software automatically. Various reports may be generated by the system for management usage on a periodic basis, asdesired.

WPO Patent Disclosure No. 2015/079776 to Hishiki discloses the use of a work state management system that manages clock in times for drivers of vehicles that work overnight shifts and calculates the appropriate breaks for the driver so that the driver is not over tired.

U.S. Patent Disclosure No. 2014/0344,122 filed by Hodgin, discloses the use for billing for time spent in an IM session by a service person wherein the system can automatically bill a project/client by searching for the name of the client or project within a text or instant message or a series or session of same. If the system cannot find the name of a client or project, then the user will associate the IM session with a new project or client so that the client may be billed for the IM session with the client. Or the System may default into a common template for the User's typical instant messaging sessions.

U.S. Patent Disclosure No. 2009/0006228 filed by Hodgin discloses the use of a time tracking system and method similar to the IM system noted above by Hodgin. The Hodgin system will also store a list of prior associations to Projects and Clients that are built on the same or similar words and phrases.

U.S. Patent Disclosure No. 2002/0154122 filed by Jackson, Jr. discloses the use of an improved system for employers, referral agencies, consultants and independent contractors to hire and manage employees and provide tax reports and wage reports. The Jackson, Jr. System may track and manage employees, salaries and experience to provide optimal benefits to the employer. The System produces computerized scheduling, billing, record keeping and payment templates. It provides a listing of invoices for the User to refer to. It consists of providing invoices for contractor services and performs its functions in a cloud based system.

US Pat. No. 8,838,486 issued to Kong, et al., discloses the use of a time manager interface on a communications display device which allows a worker to keep track of her or his time and activities. The time manager keeps track of time spent logging into and out of the system. This was important in years past when boot time were quite long. It discloses the use of scanning in employee badges to track work time. This disclosure is directed toward a system for checking work in and work out time. In one version of an embodiment, the System is located in the field. It discloses the use of GPS in the field to create an audit trail of time worked. Biometric information may be used for the system to identify the worker. It can be used nationwide for multiple local offices. It may be coupled to communicate with employee hand held devices. It can work over WiFi and cellular networks. It can store: DOB, SSN and other employee details. It can be used with a barcode or QR code. It can be used in connection with microphones, cameras and scanners. For remote sites, the system can check the IP address of the computer or hand held device to ensure security in the system. The system can also be used to check work schedules to lock an employee out of the system when not scheduled. When an employee arrives at a worksite, upon verification, one or more emails or text messages may be sent to management for that site. Employees may view the work schedules of other employees if granted permission to do so. In doing so, employees can request work dates and exchange them with others. The system can differentiate between exempt and non exempt employees. The system can display messages to employees during time in and time out registration.

U.S. Patent Disclosure No. 2012/0278211 filed by Loveland discloses a system for remotely tracking and monitoring Worker's activities via mobile phones or other mobile tracking devices. This system monitors continuously whether or not a worker is present at a worksite.

WPO 2010/11652 filed by Manser discloses a System and Method for tracking employee performance. The Manser system provides a user interface to allow the user to assess the balance of hard skills and soft skills of an employee, evaluate the employee's performance in a plurality of categories and compare the average cost for the job in the marketplace to the cost of the employee being evaluated. The system also analyzes the average cost of a similar job in the relevant marketplace during employee reviews. The program continually monitors the value of an employee to the employer to determine ROI at any given time. The system can be applied to direct hires, contractors, temps or any employee relationship. The system allows the identification of both over achievers and under achievers. The system provides a means by which employees may determine how to get the highest ratings via their work efforts.

EP 2338293 filed by Molotsi discloses a system for time tracking for employers on a mobile computing device. The system involves providing an event manager on a mobile computing device for managing a plurality of events which are then synchronized to a server. The system will automatically track time and estimate time spent on a task by the worker. This system logs events in the user's calendar, in emails and texts. Timestamps for events and mapping for the events are provided. A client list and data may be provided in one or more files or databases. The system may communicate with a worker's smartphone. The user may be able to open, edit, delete, review or manage all automatically created event records. The system may use information in the text, email, and calendar to automatically create a time tracking record for the user. In addition, the system may automatically convert emails, texts, meetings on a calendar to a time tracking event by means of a pop up box to the user.

WPO 2008/061146 filed by Neveu Holdings, LLC discloses a system and method for remote time collection for employee time on job sites. The system can collect an employee's name, picture, title, contact information, health and/or safety information, skill information, etc. The system can also collect for each employee a project name, project identification, location, project start date, project supervisor and detailed comments about project activity. The system can also collect information on vendors, such as name, address, phone, contacts and type of vendor. The system can also use GPS information and compare it with when the employee is supposed to work. The system collects biometric information to identify an employee. In one embodiment, a time collection database is configured to receive, process and store information related to projects such as name, identification, location start date, supervisor, etc; vendor's name, address, number contact, subcontractor type, etc. project supervisors, tasks, employee titles, departments and employee time records. Office data collection may include: job site, task and project information via a wireless connection. Encryption is used to transmit data to and from the remote site. The system may also include a field scheduling module to schedule a job for a particular jobsite and for a specific remote user(s). The user can edit hours and view comments from remote workers. Remote monitoring can record task completion, view management comments and ask for management assistance and crew responsibilities.

U.S. Patent Disclosure No. 2015/0081381 filed by Okoba discloses a system and method for recording time which may be used on a device, software or application. It may be used by logging into a plugin or extension. The time recorded may be exchanged for vouchers which may be redeemed or traded with othermembers. A user will register with an ID and password to log into the system. The system may record device activity, software activity, application activity, keyboard activity and mouse activity. The user's time spent in the browser or on a video game may be given a redeemable value. A database may store the recorded activity for further analysis. The system will work on computers, tablets, cell phones, television, games, digital books, exercise apparatus, web browsers, mobile apps and video games. Vouchers may represent monetary value, promotions, products or services. User name and password may be stored in system cookies. The system can capture video game or browser activities, keyboard or mobile keyboard activities. The activity spent in the system may translate to purchasing power so that the user may receive optimized value from their activities and the system may deliver purchasing incentives at the right time and place and for the right product or service. A business maybe selected as a favorite from user activity on the system.

U.S. Patent Disclosure No. 2015/0081487 filed by Porter, et al., discloses the use of a time tracking and productivity system including a tracking component to locate an employee to record time spent at various locations. This system is designed to monitor and improve coordination of patient care, and in particular, to limit the number of patient hours a resident physician can work per week. When the rules implemented by the ACGME are violated, strict fines and probations or suspension may be implemented. This system is primarily concerned with tracking an employee's location and work hours. This system can include cloud performance. It is the movement of an employee within predetermined boundaries that will trigger the recording of a new event. It can track time in a patient's room, a brake area, doing paperwork, etc. A GUI is used on handheld devices. The system can also use tags that interact with RF signals. The system records employee info and FRIDA numbers, the resident program director, the resident coordinator, start and end times for resident shifts, house calls, hospital room calls, night float, etc. If moonlighting is permitted, the system can track moonlighting hours as well. It will store vacation schedules and rotation schedules. The shift log can include a short trip buffer. Automatic warnings of over limit hours are sent to management for the residents via text, phone, email, etc.

US Pat. No. 6,185,514 issued to Skinner discloses a method and system for automatically collecting and analyzing information regarding time and work performed on a computer. It uses a data collector for monitoring certain portions of a worker's computer activity and an analyzer for showing which portions of the activity were continuous work activities, and the system will categorize the work into preset projects and tasks within a project. The information is periodically written to data storage. The system is directed toward telecommuters. The system automatically excludestime where there was no activity on a computer. The system is used to forecast future projects with reduced financial risk. The system includes the automatic documentation of time. The data stored on the system is encrypted so that it cannot be altered by the user. The data collector automatically collects the activity on a mouse and on the keyboard of the computer user. The system creates a log file of work activity. A hardware abstraction layer can interface with phones and other devices and can be used with pointing devices such as a tabled or mouse. The system keeps track of activities within open multiple windows on a computer.

US Pat. No. 8,209,243 issued to Smith, et al., discloses the use of a system for performing real time labor management and timesheet reporting which is adapted to wirelessly transmit timesheet information. The portable devices may be dedicated to tracking time only and cannot perform other computing functions. The system includes a portable electronic punch system that is capable of communicating with the labor management system via text. The system allows user to manage work schedules and report timesheet information without requiring an internet accessible computer. The units send timesheet information directly back to the server for analysis via wireless network. The text messages may contain: employee ID, clock in time, clock out time, break times, days worked, days off and other work related information. New user information may be set up by text message into the timekeeping system. The system may operate over any wireless system, i.e., GSM, GPRS, CDCP, Bluetooth, Wifi, etc.

US Pat. No. 9,020,848 issued to Ridge, et al., discloses the use of a method for tracking time and location of an employee according to a predefined schedule and it may utilize software to track the presence or non presence of: a NFC (near field communication), BLE (Bluetooth Low Energy) or other wireless device. The system will track the presence of an employee in a geofenced area. It will also track employee time and other data to log that into a payroll system. The low energy device then communicates data to a server if a signal could or could not be detected. It will also allow for manual clocking in and out in case of failure of the back end server. The system can also be used for security purposes. The system can function in real time or in batch request mode. The information may be a time stamp, a status or location of a mobile device. In one embodiment, the system can be used for employees for a retail store or restaurant. The system can utilize Bluetooth tapping to log in. It may be used at a trade fair both by tapping the device to a NFC communicator. It maybe used in connection with a mobile time clock app. It can be used to advise management when non authorized employees enter a restricted work zone. Management may input which work zones are restricted and which are not.

WPO Disclosure 2015/029073 file by Shirish discloses a system and method to measure aggregate and analyze time, effort and productivity by reviewing time spent on activities such as calls, travel, lab work, meetings, discussions and remotevisits. PD's or Presence Devices may be used to track employee location. The system can track average daily work patterns. It can track work activities and private activities. It can track emails and browsing. It can account for flexible work hours, use of multiple and different types of computing environments (PC at work and home, smartphones, tablets, etc.) It can capture files, folders, web links, etc. It can make all personal endeavors password protected and private. It is intended to track effort and performance 24/7. It can provide modules that promote work focus and minimize distraction by awarding performance points, badges for consistent performance and progress in performance goals. It can measure improvement by creating an n-dimensional effort data cube and include analytics for custom reports. The system can go into self improvement mode to set goals for self improvement and activities related thereto. It can be used at work whenever and where ever. It has a time tracker for all online time. It has a Merger to merge offline and online time effort mapping. It has an interference engine to determine Work Patterns for employees, leave taken, work done on holidays, desk or supervisory or travel oriented job, etc. The System will also present organization goals and analytics, top performers, work patterns, recent deviations from work patterns. A Collector module measures data to improve the exact work effort at the individual level throughout the day. The System can be used on SAS (Software as a Service) and it may be hosted in a cloud-computing environment.

U.S. Pat. No. 2012/0173297 A1 disclosed by Styn, et al., a method and system for task tracking and allocation is disclosed. The disclosure provides for a method in which an individual may create a set of instructions operable to perform a set of tasks in a computer readable medium. That set of tasks may comprise maintaining a database, generating a first interface displaying subjects associated with individual issues, and a second interface with notes specific to an issue selected by a user. The instructions stored in the database may be implemented accordingly and the computermay maintain a plurality ofrelationship records containing data indicating relationships across folders. The disclosure also mentions the prior use of MS Project and ERP systems that employ Gantt charts, milestones and tasks and subtasks with complex dependencies. This system keeps track of billable items. However, Van Styn is not a true timekeeping and professional billing system.

US Pat. No. 2014/0108644 A1 disclosed by Zaents, et al., a method and system for tracking time in a web-based environment is disclosed. The method of tracking time involves a web-based application to track time associated with several records. Identifying a record in an active state, generating a record associated with the active record and activating a timer, and having the ability to end the session in response to an indication that the record is an inactive state. The time-tracker may be hosted in a cloud-computing environment. The time-tracker may calculate the entire duration of the record by continuously adding the active times together. The method may detect a predetermined total duration of time has been exceeded and provide such indication to user. This disclosure mentions timekeeping, billing and using a web browser and multiple tabs to record time for multiple clients when a professional is switching back and forth between projects. It is useful for billing, accounting and auditing. More than one user can log into the system on a computer and track time her or his time on the same computer. It also teaches the use of sub-tabs to track time. A stop watch type button is used to switch on and off the time tracking, or time is tracked as the user switches browserwindows.

However, none of the above patent disclosures teach or suggest improved billing and timekeeping systems which are able to directly editwork- in-progress sheets, draft and final bills and automatically have those changes reflected in the original work data entries. There are also no timekeeping and billing systems seen in the marketplace that can automatically predict cash flow, partner profits and allow clients to view bills in real time. These and other additional objects and advantages are readily derived from the disclosures and drawings provided herein.

### Summary of the Invention

The present invention consists of improved internet and automated based methods and systems for professional services firms, companies, and other business associations which may automate their collections methods through the use of online accounts, email, phone, twitter, text and other methods to remind clients when payments are due and direct them toward a mobile app or to a website to log in and pay their account balances. The present inventive system and method also provides for automated means to then allocate payments according to a predetermined set of rules where allocations are made in the following order: 1) taxes; 2) hard costs, 3) soft costs; 4) professional fees. In the present inventive system and method for collections, a payment may be accepted despite the fact that client has not yet been entered into the system. When that occurs, all relevant data from the payment will be collected, such as the name, address, banking information, including bank account will beentered into the System to help the client originator match the payment automatically when payment has been entered earlier. In fact, the System may automatically prompt and produce a list to client originators to remind them to enter client information to payments which have already been received by the Inventive System.

When payments are made, it is important to determine if the client has an outstanding balance and has had sufficient time to review the bill before applying a payment to the firm's A/R account. If insufficient time has elapsed, which is typically 7 to 10 calendar days, then the payment received is automatically applied to and accepted by the company's NR account.

However, in instances where the payment comes prior to generating an invoice, the payment must be held in a client trust fund account until sufficient time has elapsed between bill and payment for the payment to be transferred to the NR account. While this is the general rule for law firms, it may not be the case for all businesses, and therefore the business user must select from the automated system whether the company actually has a client trust fund, or if payments are always applied to an NR account. Next the business user of the System must select the number of days between receipt of a payment without an invoice or with a recently generated invoice, prior to placing funds in the A/R account, or when to transfer these funds after a predetermined amount of time. Finally, it is up to the client originating professional to determine when and if funds are transferred. However, management will be alerted to client funds held but not applied after a certain number of days so that management will be able to encourage any professional timekeepers to release those funds from the trust account to the NR or operating account.

Next, the system will determine how funds received will be applied to the firm's NR account according to the jurisdiction or location of the billing office. In certain countries, all payments received must be applied to the tax account first and promptly turned over to the taxing authorities. In other jurisdictions, taxes are paid to the authorities according to the amount of the payment received and taxes may be prorated by a ratio of payment to total bill due and outstanding. Finally, some jurisdictions have no tax due on professional services and this information is stored in the present inventive system and method for the improved automated collection of client payments.

Further, it is very important that before any collections efforts are made, in the US, the client should be categorized according to area of law utilized and whether or not, based upon the area of law, the debt incurred is personal or business in character. For when a debt is personal, and may be generally categorized as normal and ordinary household expenses (legal areas such as divorce, child custody, consumer fraud, predatory lending to a consumer, home mortgage, consumer finance, etc.) then the debt must be carefully handled according to the Federal Fair Debt Collection Act 15 U.S.C. § 1692 which prohibits the company from collecting in certain manners during certain times, and the creditor must respect any do not call instructions, or do not email or otherwise contact lists and requests. In addition, the FFDCA proscribes times and amounts of collections efforts, say no more than 2 calls per day to a household; these parameters will not be exceeded. The present inventive system will be able to ping the Federal "Do Not Call" list for phone numbers to exclude from dunning inquiries.

However, if the debt is purely business in character and cannot be categorized as household expenses, then there is more freedom granted in contacting the debtor and times and places for collection efforts are much broader, in general. Certain areas of the law are pure business in character such as patents and trademarks, admiralty law, incorporations, bylaws, etc. In these cases, there is not much worry about the FFDCA as long as the collections efforts are reasonable and would not amount to harassment, coercion or duress.

In addition, the system should have several sets of books for allocating payments. This is especially important where the client is being charged interest after payment is made later than a specified date, say 14 or 30 days after a bill is generated and delivered to the client. In the case of ebills, it may be possible to flag the account for interest after 14 days; however, where the desire method of bill transmission is mail, an additional 5 business days or calendar days should be added to the time period before interest begins to run.

Further, there are additional concerns with respect to charging the client interest. Whereas for partnership evaluation purposes, the firm may want to recover a proportionate share of hard costs (building, land, inventory, supplies) and charge that against a partner, then recover soft costs (fax, phone, travel, taxi, disbursements to the client), and then the partner will be assigned a "leverage ratio", that is a ratio that represents the value of the client to the firm, in the case of client interest, the payment always has to be applied to the oldest invoice to avoid excess interest charge.

Of course, when client payments are timely, e.g., within 14, 30 or 45 days, the system will be able to apply specific payments to specific invoices as directed by the client. In that case, the payment method (cash receipt, bank ACH payment, other epayment), can be scanned in together with an invoice and the payment may be automatically applied by the system. Or the invoice number may be manually entered by the user thereof. If there is no invoice number, then the payment will be generally applied against the client's outstanding balance. In the case of over payments, an automatic notice will be sent to the client alerting her or him of the overpayment and asking if they desire a refund, and if so, by which payment method. In the case of credit card payments, often the refund is limited to a refund processed by that credit card. Otherwise, if the client makes no selection, and in the case of a law firm, the over payment is automatically transferred to an IOLTA or other trust account for the firm, with the client's name being clearly marked thereupon. Similarly, if a law firm has received a payment it cannot match to a client, that payment will be placed into an IOLTA account or other trust account unless and until the client has been identified. Again, if the client has not been billed, the client will be offered a refund of the amount after a specified time period, or upon demand to the firm.

The collections system will initiate when a client is a certain number of days late in bill payment. For example, one preferred embodiment of the present invention is an email after 10 days late, a mailed letter after 20 days later, and then a phone call at 30 days late. The System can easily produce reports that show the most effective means for collecting a particular type of bill. In one preferred embodiment of the present invention, late payments are classified as low priority for those under 30 days late and then move up in priority as they become later and later in the system. Once late, clients will be called and asked to make a promise to pay, and after several broken promises to pay, they will then be moved to top priority, and the bill will be moved to the litigation department for potential litigation, or to a collections agency, and/or to a credit reporting agency to produce a negative mark against the client's credit. Of course, these actions may be tied to a flag that indicates when the client matter was completed for the client, so that escalation of a billing dispute does not induce the client to file a Bar complaint or malpractice suit. It is generally considered best to sue a client for payment only after all work is done and the time period is past the limitations period on filing a malpractice claim. This means the client can only sue for breach of contract, which is very hard to prove, and he or she is unlikely to get attorney's fees or punitive damages.

In some cases, the client has paid in a different currency than the local currency, and the company has agreed to accept that currency. In such cases, the client's account will be credited according to the then prevailing exchange index agreed to between client and company. The System will ping the agreed upon exchange authority immediately prior to calculating payment and applying it to a client's account. The inventive System will allow the client to choose from a plurality of websites on the internet to optimize exchange rates to the consumer. The System will also have a threshold where balances will not be billed out if they are under a certain nominal amount (e.g., $10 or $25) so as not to bother either the firm or the client. All write offs will show on the client's permanent file as "courtesy credits."

In addition, the present inventive System may be provided with security levels which the client originating partner or billing partner chooses for contact with the client. Some clients maybe marked "private and confidential" meaning no one from the firm is allowed to contact the client other than the attorney, and the client's name is never disclosed outside the firm. In addition, the client's collections cannot be displayed to staff or to anyone other than the billing or client originating attorney. Other clients are marked immediate staff only, for only the attorney and his associates and staff, while others are marked open communications with staff and the billing department. Insuch cases, the billing department will not bother the client and will issue payment reminders directly to the billing partner or client originating attorney and ask that attorney himself or herself to directly contact the client by fax, email, phone and/or text with personal reminders to pay the bill.

It is anticipated that the firm will allow clients to create online accounts, complete with various options for client and attorney information and billing information and credit card, Paypal, Quickpay, etc. payments readily available to the consumer. If a client desires to opt for a payment plan, a contract will easily be prepared between the consumer and firm in minutes, complete with an esignature and an email of all terms and conditions. If a client needs a bill generated in a foreign language, the System can automatically display all bill text in a plurality of foreign languages.

Clients will also be able to pay by faxing, texting or emailing a check to the firm. The system can automatically capture scans and pictures of checks and then recreate the check and submit the payment via overnight ACH (automated clearing house) transfer, or the present inventive System will duplicate the check information (sender, sender's address, phone number, check number, amount, bank name, bank address, routing and account number) and even clip and transfer the check information to a program that will print the check at the firm for deposit into the firm's IOLTA accountor into the operating account, as has been determined by the System according to a predetermined set of rules. The System will be able to log into the company's bank accounts and check for direct deposits, Paypal transfers, Quick Pay payments and other internet and electronic payment methods and download this deposit information directly into the system and apply it against deposits for the client IOLTA account or a trust account or the firm's operating account as has been selected according to a pre determined set of rules.

In addition, when a cash payment or check payment has been received, accounts receivable may log into the System, enter the date of the payment and the amount and type of payment and then automatically generate a deposit slip if the payments will be personally delivered to a local bank. The System will also be able to automatically reconcile bank statements with the company's general ledger, bank ledger or master data and flag any incorrect or missing data from the System.

A further feature of the present inventive System is to automatically provide "courtesy credits" to the client for cooperative efforts in litigation, negotiated flat fees, cash payments (to avoid credit card fees), prepayments and early payments on bills generated by the System. Client cooperation may comprise one or more of the following: cooperating with counsel and staff, attending meetings as required, attending court appearances as required, etc. The System will also revoke courtesy credits upon the following conditions: client late payment, client non payment, client fails to attend meetings or court when required, client fails to return phone calls, emails, texts, etc. The System will be able to produce online accounts receivables reports to collections staff and the attorneys by sorting by invoice, date, client name, billing or originating attorney, text, etc. in one line reports which can be seen in detail in a pop out window or PDF as desired.

Accordingly, the present invention has been described with various configurations and alterations which are present in a number of preferred embodiments. However, other alterations and configurations commonly known in the prior art should be considered as being part of scope of the present invention as if fully set forth herein.

According to one aspect, there is provided an improved billing and collections system comprising a CPU and data storage, an invoice for a client stating an invoice date, a description of work performed, a total charge for the invoice, the improvement comprising: providing an online account with an ID and password, when logged into the account the System will display a one line list of past invoices and payments viewable by the client; at least one payment reminder to the client; means for electronic payment of at least one client invoice displayed to the client, wherein the user may clickon any one line list of past invoices in order to display further details pertaining to that invoice and to make an immediate online bill payment.

According to one embodiment, the improved billing and collections system further has means to log payments into the System without a client name being provided on the payment; means to gather information from the payment selected from one or more of the group comprising: client address, client phone, bank name, bank address, bank routing number, bank account number and invoice date.

According to one embodiment, the improved billing and collections system further has means to log a payment into the System, means to compare the payment date to the invoice date, and means to select from one or more of the following accounts to log the payment into one of the following accounts, based upon the difference in days between payment and invoicing chosen by a set of predetermined rules: trust account, IOLTA account and a firm account.

According to one embodiment, after a certain number of days have passed since the billing invoice was generated and sent to the client, the System will automatically generate at least one dunning communication to the client which is selected from the group consisting of: fax, email, tweet and text;

According to one embodiment, the improved billing and collections system is further provided with means for the user to select at least one discount payment from the following payment discount preferences: a discount for early payment, a discount for payment within a certain number of invoices from the bill date; a discount for entering to a payment arrangements over a period of time and then making an immediate payment.

According to a further aspect, there is provided an improved billing and collections system comprising a CPU and data storage a billing invoice for a client stating an invoice date, a description ofwork performed, a total charge for the invoice, the improvement comprising: entering a client payment and logging the payment into a plurality of ledger accounts and allocating the payment in the following order: 1) taxes; 2) hard costs, 3) soft costs and 4) fees charged to client.

According to one embodiment, the improved billing and collections system further has means to log payments into the System without a client name being provided on the payment; means to gather information from the payment selected from one or more of the group comprising: client address, bank name, bank address, bank routing number, bank account number and invoice date.

According to one embodiment, the System is further provided with the following: the System will ask the client for a preferred means for communicating a payment reminder and then the System will check the client's preferred method of communication for payment reminder and the system will automatically generate a payment reminder by the means preselected by the client.

According to one embodiment, the System is further provided with the following: The System may provide the user with a one line summary listing of a plurality of client invoices and the System will permit the user to click on one of the summary lines opening at least one pop up window containing detailed information pertaining to the invoice in PDFformat.

According to one embodiment, the System is further provided with the following: allowing the user to display aone line summary listing of a plurality of client invoices to the user where the user may sort the list by at least one or more of the following fields: payment date, work date, work description, invoice date and total charges to the client.

According to one embodiment, the System is further being provided with the following: the user may display a listing of client invoices according to the security level for viewing invoices according to the name of the user.

According to one embodiment, the System is further being provided with the following: the user may display a listing of client invoices according to the security level permitted for viewing invoices according to the level of employee selected from one or more of the following: billing attorney, client originating attorney; secretary; paralegal and staff.

According to one embodiment, the System comprises a CPU and data storage a billing invoice for a client stating an invoice date, a description of work performed, a total charge for the invoice, the improvement comprising: creating an online account with a password and ID for the client and checking a do not call list before calling the client to remind the client to make a past due payment.

According to a further aspect, there is provided an improved billing and collections system comprising a CPU and data storage a billing invoice for a client stating an invoice date, a description of work performed, a total charge for the invoice, the improvement comprising: generating a past due payment reminder communication to the client in one or more languages preselected by the client.

According to a further aspect, there is provided an improved billing and collections method comprising the steps of: providing a CPU and data storage, creating a billing invoice for a client stating an invoice date, a description of work performed, a total charge for the invoice, the improvement comprising: generating a one linelist of past invoices showing work date, rate, details, bill amount and payments viewable by the client; displaying a payment reminder to the client; providing means for electronic payment of a least one client invoice displayed to the client, and clicking on any invoice in the one line list of parts of invoices in order to display further details pertaining to that invoice.

According to a further aspect, there is provided an improved billing and collections method comprising the steps of: providing a CPU and data storage, creating a billing invoice for a client by stating a invoice date, a description of work performed, a total charge for the invoice, the improvement comprising the steps of: entering a client payment; logging the payment into a plurality of ledger accounts and allocating the payment in the following order: 1) taxes; 2) hard costs, 3) soft costs and 4) fees charged to client.

According to a further aspect, there is provided an improved billing and collections method comprising the steps of: providing a CPU and data storage, creating a billing invoice for a client by stating a invoice date, a description of work performed, a total charge for the invoice, the improvement comprising the steps of: generating an electronic invoice to the client by one or more of the following methods: fax, mail, phone system, email, text, Paypal and Bitcoin, the client making a payment and then automatically logging the payment into the System against at least one invoice selected by the client.

According to a further aspect, there is provided an improved billing and collections method comprising the steps of: providing a CPU and data storage, creating a billing invoice for a client by stating an invoice date, a description of work performed, a total charge for the invoice, the improvement comprising the steps of: automatically providing means for generating according to a predetermined set of rules, an offer to reduce the client's bill by a certain percentage if payment is received immediately and online.

According to a further aspect, there is provided an improved billing and collections system comprising the steps of: providing a CPU and data storage, creating a billing invoice for a client by stating an invoice date, a description of work performed, a total charge for the invoice, the improvement comprising the steps of: requesting the client provide a preferred communication method for payment reminders; automatically generating a payment reminder in accordance with the clients preferred payment reminder method.

According to a further aspect, there is provided an improved billing and collections method comprising the steps of: providing a CPU and data storage, creating a billing invoice for a client by stating a invoice date, a description of work performed, a total charge for the invoice, the improvement comprising steps of: displaying to the user a one line summary listing of a plurality of client invoices to the user and allowing the user to click on one of the summary lines opening at least one pop up window containing detailed information pertaining to the invoice in PDF format.

According to a further aspect, there is provided an improved billing and collections method comprising the steps of: providing a CPU and data storage, creating a billing invoice for a client by stating a invoice date, a description of work performed, a total charge for the invoice, the improvement comprising the steps of: providing a one line summary listing of a plurality of client invoices to the user then sorting the list by at least one or more of the following fields: payment date, work date, work description, invoice date and total charges to the client.

According to a further aspect, there is provided an improved billing and collections method comprising the steps of: providing a CPU and data storage, creating a billing invoice for a client by stating an invoice date, a description of work performed, a total charge for the invoice, the improvement comprising the steps of: providing a security level for viewing invoices according to the name of the user; allowing only permitted users to view invoices within their permitted security level.

### Objects of the Invention

Thus, it is one primary object of the present invention to provide an improved billing and client collections system and method wherein a company or firm has an improved method of allocating partial payments according to a predetermined set of rules that allocates payments as follows: 1) taxes; 2) hard costs; 3) softcosts; 4) professional fees to produce a superior means and method to attribute profits fairly among client originating partners and billing partners in a professional services firm.

It is yet an additional primary object of the present invention to provide an improved system and method which will analyze the accounts receivables of a company or firm and will automatically generate a list of clients that may benefitfrom a payment plan which takes periodic payments for larger bills while creating additional profits by collecting interest on remaining balances.

It is still a further primary object of the present invention to provide a billing system which can be triggered to provide an interim bill before the month's end so that a client may make a payment earlier against her or his bill.

It is an additional primary object of the present invention to provide an improved billing system which can take preliminary information from a client's payment, such as from a cash receipt, a bank record of deposit, a bank check, a Quick Pay, etc. and place this into a client unmatched payments data base to be held in a trust account or an IOLTA account until the client's payment may be matched to a clientaccount and bill.

Still a further primary object of the present invention is to trigger automatically daily accounts receivables reports only to the partners that desire these reports.

It is yet an additional primary object of the present invention to produce a report to either the user or a client which consists of all the payments made by the client together with all invoices for services and disbursements to provide an automatic and accurate accounting to detect missing or misapplied payments.

Yet an additional primary object of the present invention is to assign billing security levels by the billing or originating partner for the purposes of determining who at the firm or company may contact the client regarding billing and collections matters, which clients should be considered completely confidential and may not be revealed publicly, and any further instructions on how staff at the firm or company is to handle collections and dunning letters for each client.

Still an additional primary object of the present invention is to provide the billing partner or client originating partner with means to automatically dun clients who have not paid their bills after a predetermined period of time, according to the contract the partner has with the client. In such an manner, faxes, emails, phone calls and other means of client contact can be preselected for a reasonable and beneficial period of time for both client and firm.

It is an additional primary object of the present invention for the system to analyze billing activities such as area of law and task, and then categorize the billing client as consumer if the area of laws and activity relate to purely consumer based activities for the purposes of categorizing if the debt falls under the Federal Fair Debt Collection Act in the US for purposes of categorizing collections strategies.

It is still an additional primary object of the present invention to provide an improved collections system which will ping a national "do not call list" for the purposes of determining whether or not the firm's collections or accounts receivables department is able to call the client to remind her or him of payment.

Yet an additional primary object of the present invention is to provide an improved firm collections system, where the client can choose online the type of electronic invoice to receive, the type of electronic payment to be made, and the exchange rate to ping if the client decides to pay with non local currency.

It is still an additional primary object of the present invention to provide an improved firm collections system wherein the firm will choose the number of days between when a client makes a prepayment, and the law firm renders a bill, to transfer funds from an IOLTA account or other trust fund account into the firm's operating account.

And an additional primary object of the present invention is to provide an improved firm collections system where the firm may decide, after a given period of time of non payment, to generate a credit agreement and offer the client a payment plan, and have the client sign the agreement either physically or online with a click and return the agreement together with a first payment.

Still a further primary objection of the present invention is to provide an improved firm collections system which will automatically produce a bank deposit slip when cash or check payments are logged into the System and the deposits are personally delivered to the bank daily.

Yet an additional primary object of the present invention is to provide an improved firm collections system which will provide courtesy credits to a client for prepayments, early payments, cash payments, client cooperation and other situations which save the firm time and trouble in collections.

An additional primary object of the present invention is to provide an improved firm collections system which will allow debts of the firm to be categorized as low, medium or high priority, where low priority debts are handled with automated fax, email or text friendly reminders for payment, medium priority debts are handled by phone and a request for a payment date, and high priority debts are sent to collections or the litigation department for further review.

Still a further primary object of the present invention is to provide an improved firm collections system which will automatically remind clients to pay by automated fax, email or text at regular intervals, e.g., ten days, twenty days and thirty days later.

These and other objects and advantages of the present invention can be readily derived from the following detailed description of the drawings taken in conjunction with the accompanying drawings present herein and should be considered as within the overall scope of the invention.

### Brief Description of the Drawings

Figure 1 is a flow chart of the present inventive system, improved billing and collections system.
Figure 2 is a is a flow chart of the present inventive system, improved billing and collections system.
Figure 3 is a is a flow chart of the present inventive system, improved billing and collections system.
Figure 4 is a is a flow chart of the present inventive system, improved billing and collections system.
Figure 5 is a screen shot of one preferred embodiment of the present invention showing "PaymentProcess."
Figure 6 is a screen shot of one preferred embodiment of the present invention showing the screen for "Post Incoming Payments."
Figure 7 is a screen shot of one preferred embodiment of the present invention showing "Post Incoming Payments and Enter Partial Payments."
Figure 8 is a screen shot of one preferred embodiment of the present invention showing "Billing and Payment Report."
Figure 9 is a screen shot of one preferred embodiment of the present invention showing "Billing and Payment Report".
Figure 10 is a screen shot of one preferred embodiment of the present invention showing "Billing and Payment Report" and a drop down menu.
Figure 11 is a screen shot of one preferred embodiment of the present invention showing "Billing and Payment Report" showing line items.
Figure 12 is a screen shot of one preferred embodiment of the present invention showing "Billing and Payment Report" showing line items.
Figure 13 is a screen shot of one preferred embodiment of the present invention showing "Matter Customer Enhancements.".
Figure 14 is a screen shot of one preferred embodiment of the present invention showing "Project Builder" items.
Figure 15 is a screen shot of one preferred embodiment of the present invention showing "Project Builder" items.
Figure 16 is a screen shot of one preferred embodiment of the present invention showing "Project Builder" items.

### Detailed Description of the Drawings

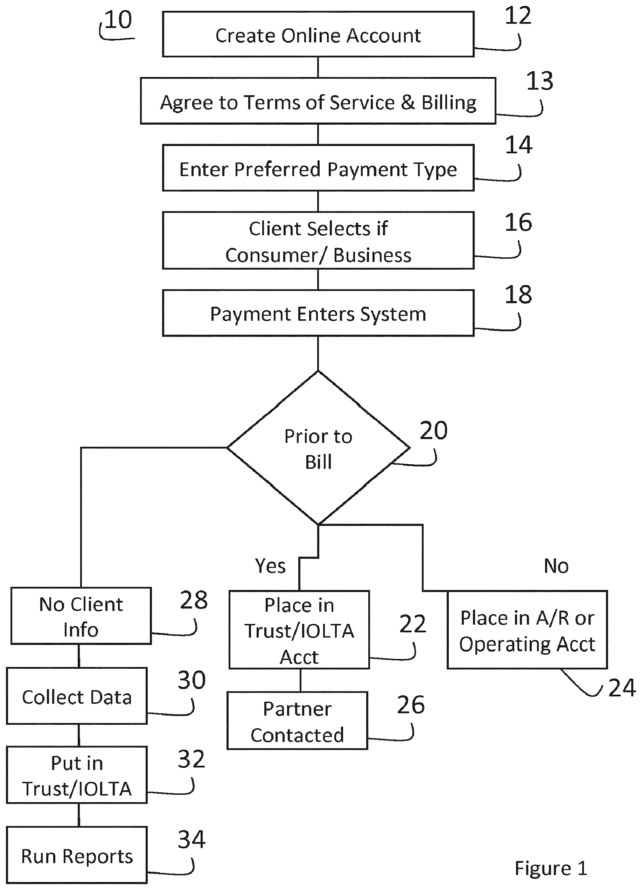

Shown now in Figure 1 is a flow chart showing the present inventive system, Improved Billing and Collections System 10. In this particular embodiment of the present invention, Improved Billing and Collections 10, is shown the user creating an online account 12 to access her or his information as a Client of the firm. The Client will choose an ID and password. The Client may then agree to terms of service and billing by the firm 13. The user may then enter the preferred type of payment and e-invoicing to receive bills and pay bye-invoicing 14. E-invoicing may include some or all of the following money types: PayPal, Bitcoin, e-money orders, bank account information (bank name, routing number and account number). E-invoicing and payment are often preferred for both the consumer and the business for the following reasons: little or no float time until money is accessible to the business, the service is often free or much lower than credit cards, though the present invention will accept credit cards and debit cards as traditional payment methods. The system will also accept ACH payments from Clients and daily, near daily or weekly bank account downloads will detect and automatically enter information for those according to the present inventive system.

Next, the Client will select in the automated system whether the Client has any consumer debt from the firm 16. The importance of this selection is because laws are generally much tighter when dealing with dunning consumers under the Federal Fair Debt Collection Act, whereas collections with a business are much more lenient. However, licensed professionals such as law firms, accounting firms, architectural firms and professional engineering firms may still have ethics standards where they are not permitted to dun their Clients so frequently it becomes harassment.

In addition, in the online account, the Client may select from a variety of exchange rate Internet publications (New York Times, Wall Street Journal, etc.) to optimize exchange rates if paying in a foreign currency. The Client will be allowed to change the published rates to be pinged for exchange at anytime prior to payment to optimize the rate to a Client. Further, the present inventive Billing and Collections System 10 will allow the Client to request a discount on the bill when appropriate for early payment or prompt payment. The Client will also be allowed to print a report with all invoices by date, and all payments by date so that she or he will be able to see if there are any missing payments or if the Client did not receive all invoices sent. The Client will be able to set the preferred method of payment reminders when any payment is late (text, phone, fax, email or letter). Of course, the firm may make at least one or two methods mandatory for overdue payments. The Present Inventive Billing and Collections System 10 will also automatically check the national "Do Not Call" list before any calls to Clients are made and the Collections System 10 will also put a warning on the Client's account that collections phone calls are notwelcome.

Next a payment enters into the present inventive Billing and Collections system 18 where it is automatically processed by the Collections System 20. The first decision that must be made with the payment is whether the Client has an outstanding balance, and if so, it is automatically placed in the company's accounts receivables or operating account 24. If there is not yet an outstanding balance, the payment will be placed in a client trust account or an attorney's IOLTA account (Interest on Lawyer Trust Accounts) which are used for charitable purposes, primarily charitable legal services to indigent Clients, or the payment may be deposited in another trust account if the Client is not a lawyer or law firm 22. For most normal payments, the payment will come with an invoice number and that payment will be applied to that invoice in the customary course of business into the company's operating account. The next step for this type of payment (no bill but Client payment is made), then the billing or originating partner is contacted via email and/or text 26 and she or he is asked if an interim bill may be run immediately so that funds can be deposited in the company's A/R (accounts receivable) account or operating account as soon as possible 24. The present inventive system Billing and Collections system 10 will then automatically transfer the funds from the IOLTA or firm trust account after a predetermined number of days set by either the firm or the Client to ensure the Client has had adequate time to look over the bill and approve its contents.

In addition, the present inventive Billing and Collections system 10will allow payments to be entered even if there is no Client information on file in the system 28. First the Billing and Collections system 10 will check for a Client name match, if that comes back null, the address, phone numbers, emails and any other data on the payment, will be entered into the system for a match 30. If all of that data-name, address, phone numbers, emails, etc. comes back without a match, then anew temporary Client will be created, but it will be missing the name of the billing partner or Client originating partner. The payment will then be placed in an IOLTA account for law firms, or in a Client trust account for non law firms, until the Client's identity can be matched with a bill 32. Until the Client is properly matched with all relevant data to a billing partner or Client originating partner, a periodic report will be run and emailed to all the partners 34 until the Client is claimed and a Client information account is properly set up.

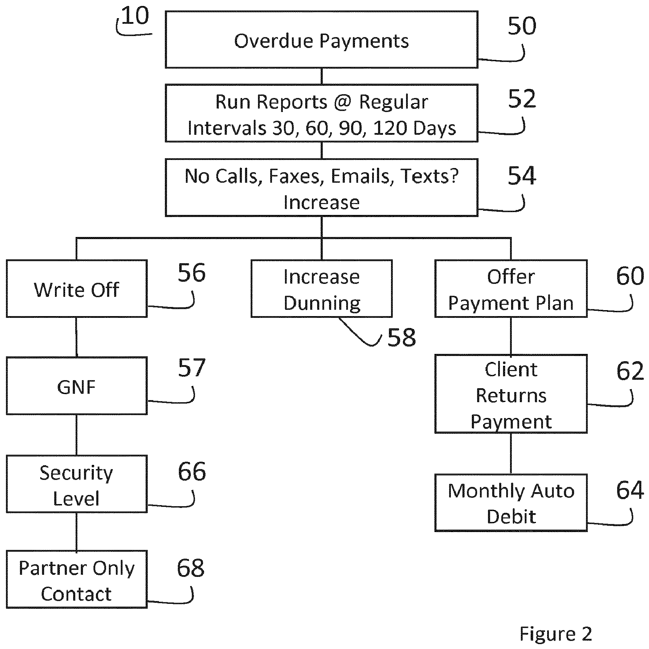

Figure 2 shows a flow chart for Overdue Payments 50. The present inventive improved Billings and Collections System 10 will run regular reports for Clients that are over 30, 60, 90, 120 days, or a pattern as selected by the firm and the billing partner 52. The reports shall indicate the amount overdue, the collections efforts made (number of dunning letters sent, calls, faxes, texts and emails) and whether those efforts were met with any success 54. At this point, the billing or Client originating partner will be able to increase dunning efforts, or contact the Client and ask if the Client paid X amount, the partner would write off Y amount 56. Or, the billing partner may be asked if he is willing to increase dunning efforts with more letters, calls, faxes, texts and emails 58. Finally, the billing partner will be able to automatically offer the Client a payment planwhere a credit agreement will be automatically generated by the present inventive system, Billing and Collections System 10, and it will be sent to the Client with a request to make payments of 10, 12, 18 or 20 months to make payment easier for the Client 60. The Client will be instructed to return the signed agreement together with afirst payment to initiate the agreement 62. The Client will be asked if the payment may be automatically deducted from a credit or debit card or a checking account each month, or via an internet e-payment service such as Chase Quick Pay, PayPal, Bitcoin and the like 64.

The present inventive Billing and Collections System 10 will also be provided with security levels 66 where a billing or originating partner will select if the billing department at the firm or company will have no contact with the Client regarding billing/collections, or some contact with the Client regarding billing/collections or if the billing department will have full access to the Client. In such a manner, security levels 66 will be set up for whether the Client is confidential and not to be disclosed outside the firm, and what levels of billing personnel can contact the Client and by what means, e.g., bookkeepers, staff or management only, or partners only. If the billing partner sets the security level at minimal contact or no contact, she or he may be stuck with personally emailing or phoning the Client when prompted to do so by the system 68 when any payment is overdue.

Of course, any write off of debt 56 will likely need to be approved by management, and regular write off reports will also be sent to management so that billing partners may be properly supervised by the system. In addition, GNF reports 57 will be sent out and some collections efforts made as long as the efforts are not outside the statute of limitations for written contracts. The Billing and Collections System 10 will be able to differentiate between discretionary write offs, court ordered write offs and those used as further inducement to pay an outstanding bill. In such a manner, the present inventive system for Billing and Collections may regularly analyze which inducement to pay write offs are most likely to generate the optimal income to the firm or company.

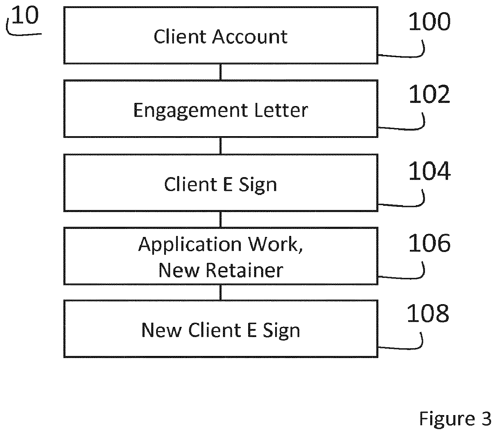

Figure 3 shows a flow chart when the Client's online account is set up for the Client 100. The present inventive Billing and Collections system 10 will ping the Client originating partner or billing partner for the preferred type of Engagement Letter or Retainer Agreement for the Client to review and sign 102. The system will allow fore-signatures of these agreements after the Client has scrolled down and read the agreement 104. In such a manner, the agreement between the firm or company and the Client can be completely flexible and updated easily by the billing or originating partner, as the Client's needs change from time to time. For example, a Client could come to the firm with a simple will and trust need. A retainer agreement is generated and signed by the Client for basic transactional work. Then the Client may have experienced an automobile accident or slip and fall and decides to use the lawyers at the firm further 106. A second agreement 108 is placed in the Client's online account for a contingency agreement for 33% of all funds recovered. Once the Client hase-signed that agreement, the billing or Client originating partner can begin work on that matter.

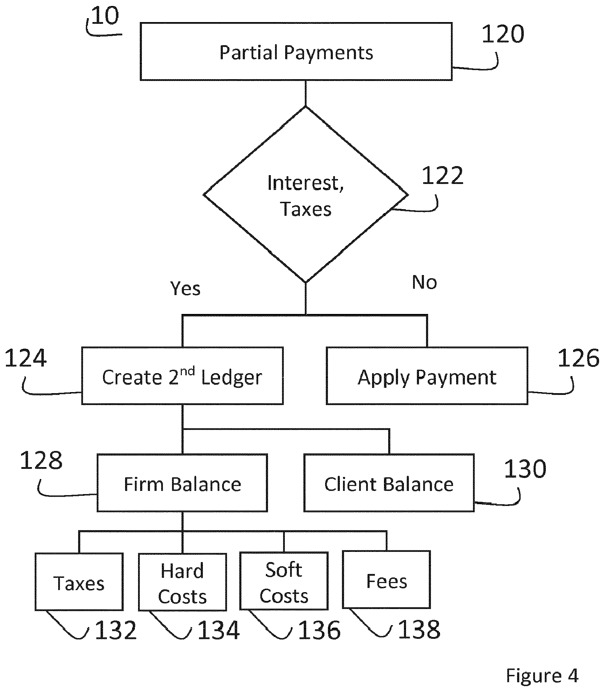

Figure 4 shows a flow chart to create an additional ledger when there is interest due from a Client. In general, when a partial payment is received 120, the present inventive Billing and Collections System 10 will analyze whether there is interest due, and if so, is the jurisdiction a pay taxes first jurisdiction 122. If so, the Billing and Collections System 124 will pay or allocate the taxes first, and then the remaining balance will be allocated on the ledger in the following sequence: hard costs, then soft costs and then professional fees or profits to the partners. This will leave one firm balance 128 consisting of the subparts taxes 132, hard costs 134, soft costs 136 and professional fees 138 paid, and another general Client balance 130 for the purposes of determining partner profits to be split. If no interest is due, payment is applied 126.

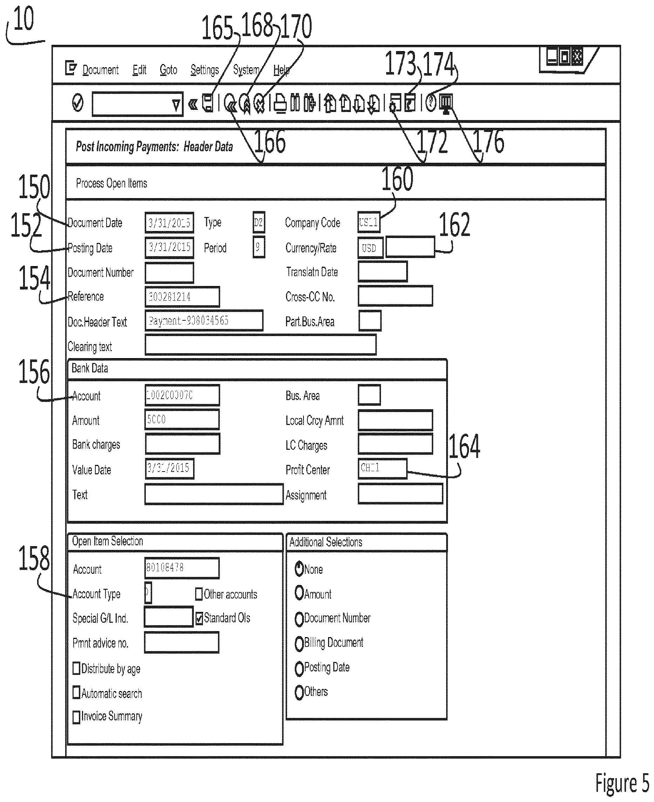

Figure 5 shows one preferred embodiment of improved Billings and Collections System 10 with a field for the transaction date 150 or posting date of a payment 152, The user can set a a date for posting separately from the transaction date for purposes of tax collections, interest calculations, etc. The Billing and Collections System 10 also shows a field for entry of a check number 154 or authorization number for a creditcard or other relevant posting data. It also shows a field for a bank account number 156 (of the company) to be noted where the payment was deposited to keep track of whether the payment was deposited in the firm's operating account for payments for salaries, disbursements and vendors, or if it was place in the firm's trust account or IOLTA account. The form also shows the internal account number for the firms accounting systems where the payment was posted to, this is the account numberof the appropriate ledger 158. Also provided is a field for company code, 160, currency rate and type (eg, Candian Dollars and the ratio of Canadian Dollars to US (1.2) 162.

At the header of the screen shot the following icons are shown: save 165, back or last screen 166, Exit Screen 168, Close application 170, View 172, Email 173; Help 174 and Research 176.

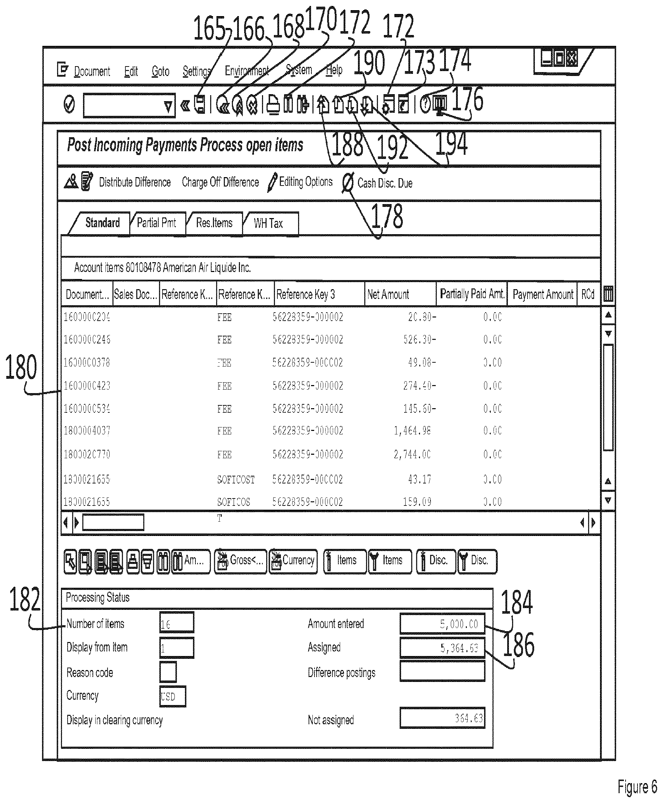

Figure 6 shows a screen shot illustrating a preferred embodiment of improved Billing and Collections System 10 for applying a partial payment to an invoice. In this particular drawing is shown the following icons: a save icon 165 to save the payment being entered; a back or last screen icon to go to the last payment entered 166; an up screen icon 168; a move up icon 170; a text payment 172 icon; an email payment 173; a help icon 174; a research the internet icon 176; a cash discount due icon 178; a m ove to top of list icon 188; a move up one in list icon 190; move down one in list icon 192; a move to last in list icon 194. The screen shot also shows a plurality of line items of invoices 180 which the user may click upon for further details; the amount entered for the payment 184 and the invoice that the payment was assigned to 186. By using email payment 173 icon and text payment icons 172, the user there of can select toturn these features on so that a billing partner or other attorney can be notified by text or email soon as a Client has made a payment and it has been entered into Billing and Collections system 10.

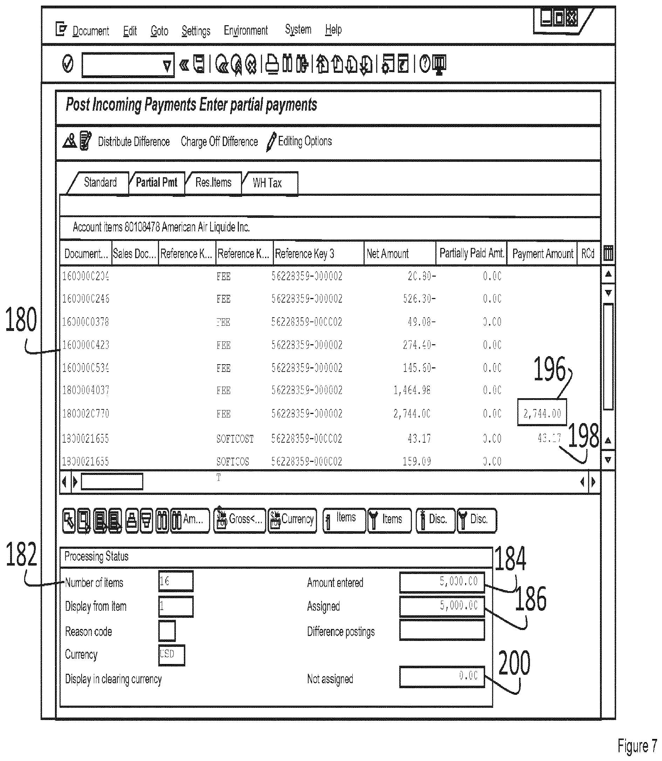

Figure 7 shows a screen shot illustrating a preferred embodiment of improved Billing and Collections System 10 for posting a partial payment to the System. In this particular drawing, the user will click on two fields: a fee field 196containing the entry 2,744.00, and a soft cost field 198 containing a fee of 43.17. In addition, the drawing shows the number of items listed 182 as being 16 invoices, and the amount of payment entered 184 as being 5,000.00, and that 5,000.00 was assigned 186 to particular invoices. Also shown the value not assigned 200 showing a value of 0.00

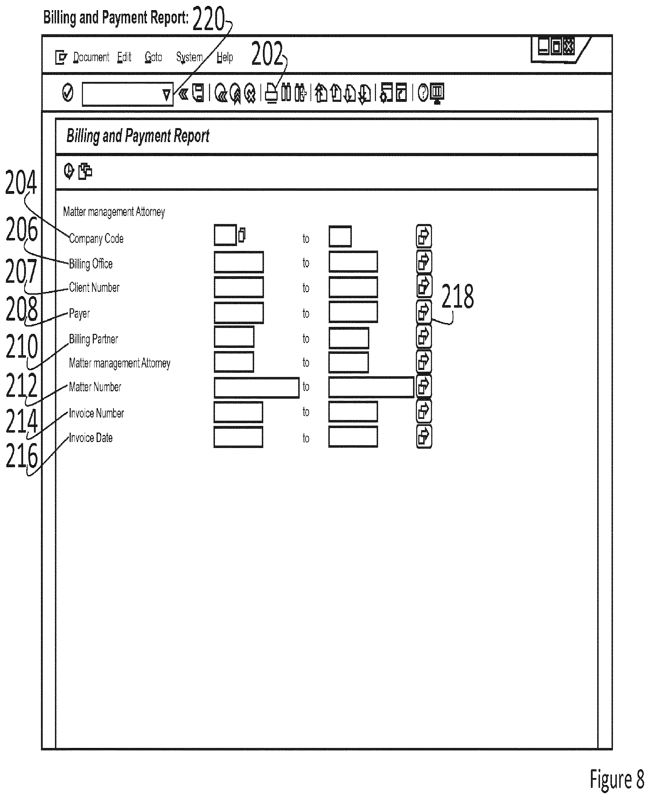

Figure 8 shows a screen shot illustrating a preferred embodiment of improved Billing and Collections System 10 for posting a payment and printing billing and payment reports. This screen shot shows: a print icon 202, a company code field 204, a billing office field 206, a Client number field 207, a payer field 208, a billing partner field 210, a matter number field 212, an invoice number field 214 and an invoice date field 216. A series of pop out box icons 218 are provided next to each field so further information in a pop out box or drop down menu may be displayed as requested by the user thereof. A search field 220 is also provided so the user can search all invoices for particular words and phrases. And a print icon 202 is provided for running reports as desired by the user.

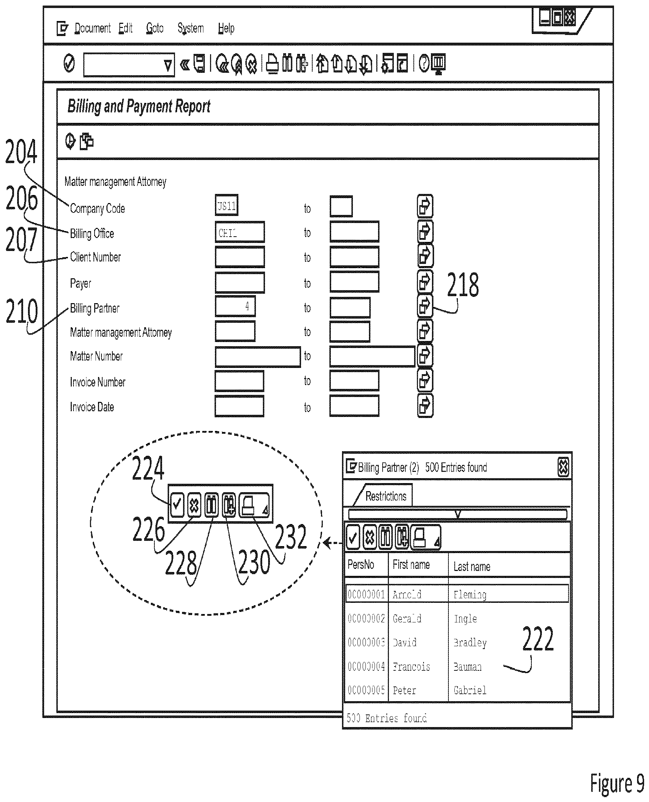

Figure 9 shows a screen shot illustrating a preferred embodiment of improved Billing and Collections System 10 for improved Billing and Collections wherein the user has clicked on the pop out box icon 218 of Figure 8 for billing partner 210and has displayed the following information in a pop out box: the select or activate field 224for selecting partners who will have access to this Client's billing and collections information as shown in the Client number field 207, and the deselect or deactivate field 226 for deselecting access to billing and collections information, the scroll home icon 228, the scroll to right icon 230, the print report icon 232 and the list of attorneys 222 are shown displayed. In addition, the company code is selected by entering the number in the company code field 204 and also selecting the billing office field 206 to select groups of attorneys or staff.

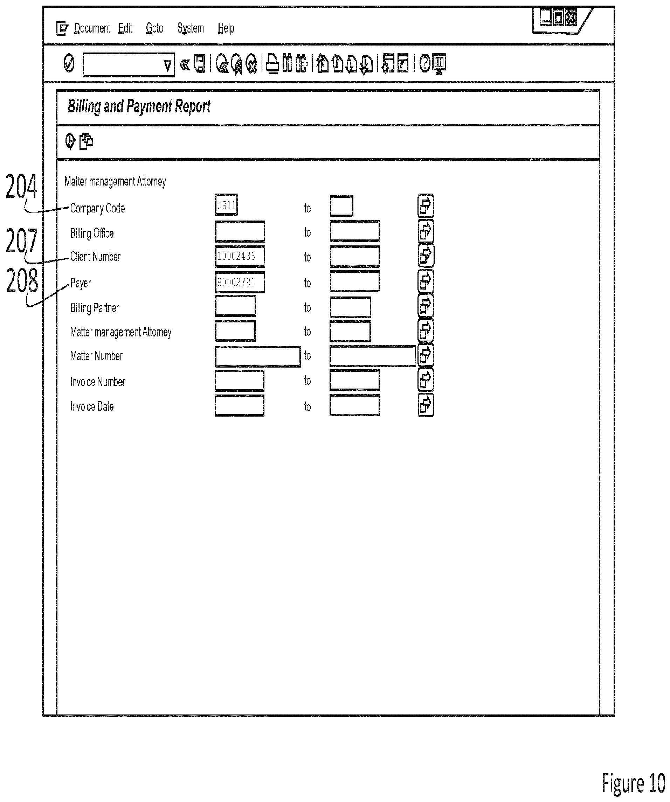

Figure 10 shows another screen shot illustrating a preferred embodiment of the present invention, improved Billing and Collections System 10wherein is displayed information in the following fields selected by the user: Company Code 204, Client Number 207 and Payer 208. A given Client may have a different payer for his account, or multiple different payers for the Client's account. This is often the case where an insurance company has hired an attorney, firm, or groups of attorneys to handle its litigation matters.

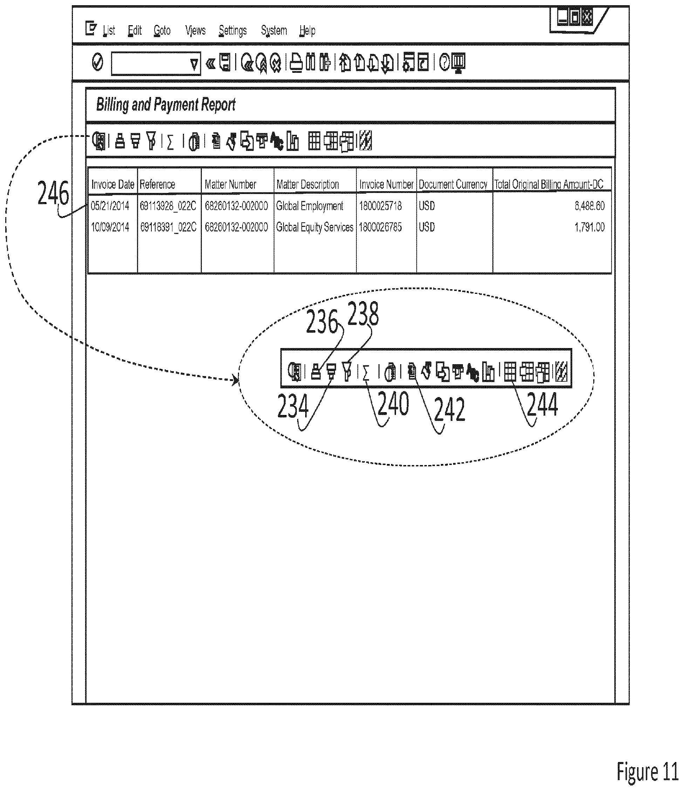

Figure 11 shows another screen shot illustrating a preferred embodiment of the present invention, improved Billing and Collections System 10wherein is displayed information in a listing of chosen invoices in listing 246. Also shown in this screen shot are the following icons: descending sort icon 234, ascending sort icon 236, filter fields icon 238, sum invoices icon 240, download invoices icon 242 and invoice report layout 244. The System is capable of producing a variety of customizable invoice reports by clicking on invoice report layout icon 244.

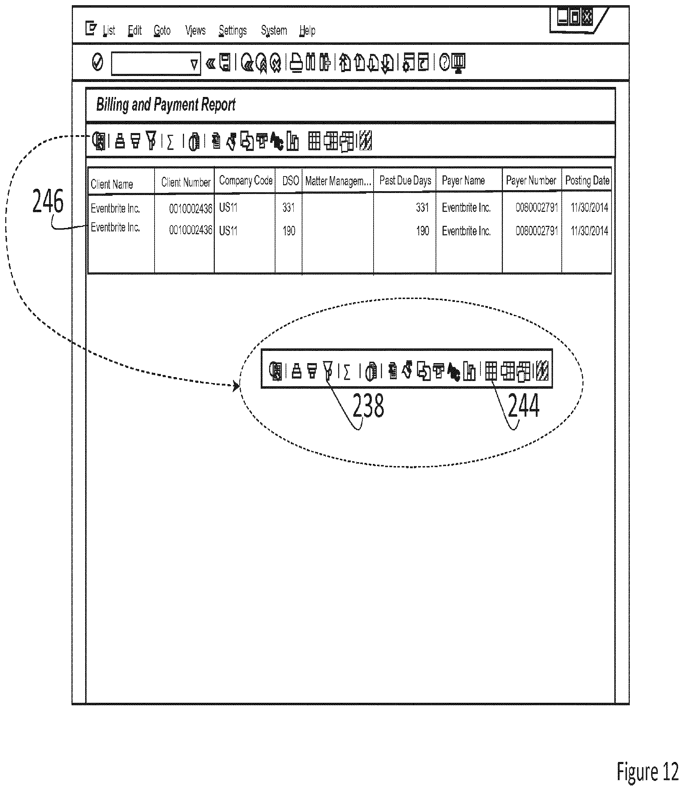

Figure 12 shows another screen shot illustrating a preferred embodiment of the present invention, improved Billing and Collections System 10 wherein is displayed a Billing and Payment Report showing filter icon 238, report layout icon 244 and line item listing 246 which was created by selecting the desired report layout and filters.

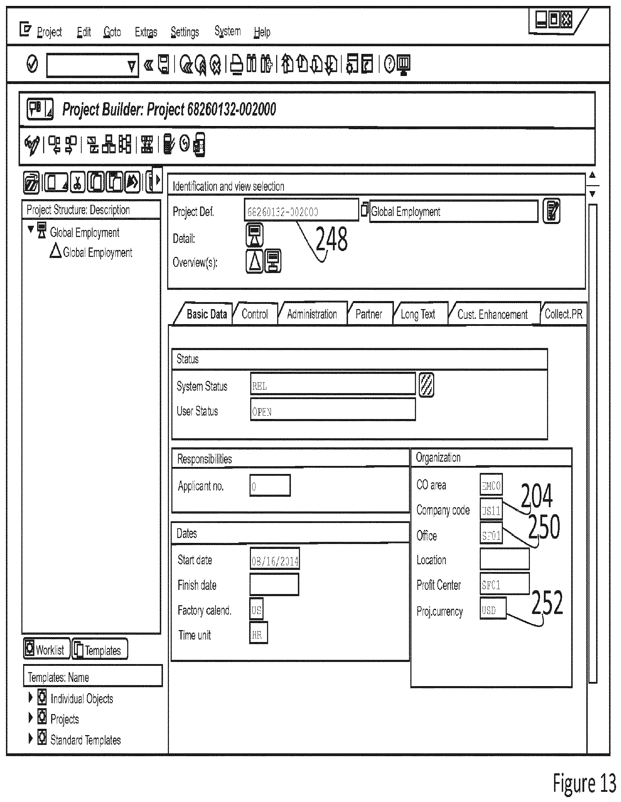

Figure 13 shows yet another screen shot illustrating a preferred embodiment of the present invention, improved Billing and Collections system 10 wherein is displayed a project definition field 248, a company code 204 for the Project, a local office field 250 designating the location for the work and the currency for the office 252 involved in the work.

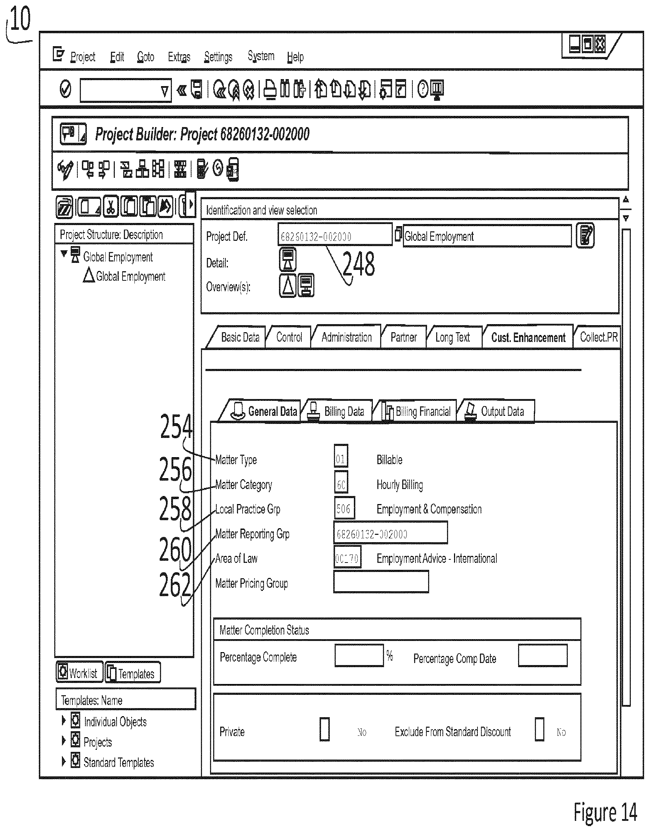

Figure 14 illustrates an additional screen shot for one preferred embodiment of the present invention, improved Billing and Collections system 10 wherein is displayed a matter type field 254, a matter category field 256, a local practice group field 258, a matter reporting group field 260 and an area of law field 262. The matter type field 254 will indicate if the matter is billable or non billable, or if the system is to hold billing or if the work is pro bono in nature (i.e., for an indigent Client with little hope the work will ever be paid for. An indigent Client is one living on government assistance-unemployment, social security, food stamps, etc. and is at or below 125% of the poverty level, and who does not own a car or home or who might be in foreclosure). The matter category field 256 will indicate if the billing is hourly billing, a fixed fee or flat rate, a custom flat fee or a traditional flat fee for the work performed. Other fields will indicate if the matter is to be shown in dunning communications and accounting statements to the Client.

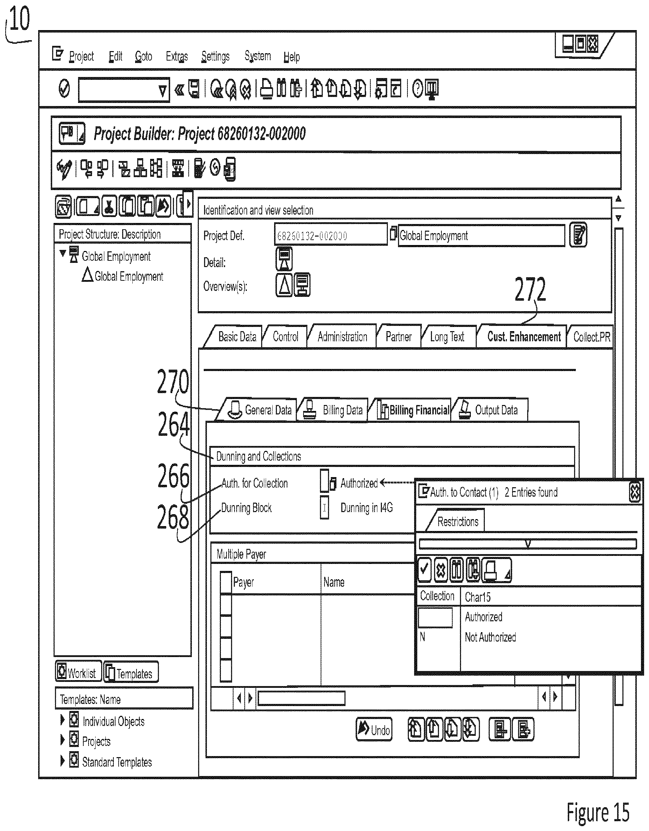

Figure 15 illustrates an additional screen shot for one preferred embodiment of the present invention, improved Billing and Collections system 10 wherein is displayed a customer enhancement tab 272 which allows the user to select a general data tab 270 and from that a dunning and collections box 264 containing the following fields: authorized for collections field 266 and a dunning block indicator field 268. If the matter is authorized for collections, it will be placed in the automated collections system which reminds the Client at various preselected intervals to make a payment, e.g., after 10 days an email, after 20 days a letter and after 30 days late a phone call asking for a promise to pay. The system will then keep track of broken promises and when a certain number of broken promises are accomplished, then the matter may be sent to credit reporting and/or the litigation department of that or another firm. The System will also calculate the last date of work on the matter so that it is not sent to litigation until after the limitations period on legal malpractice has run so the Client cannot counter claim legal malpractice.

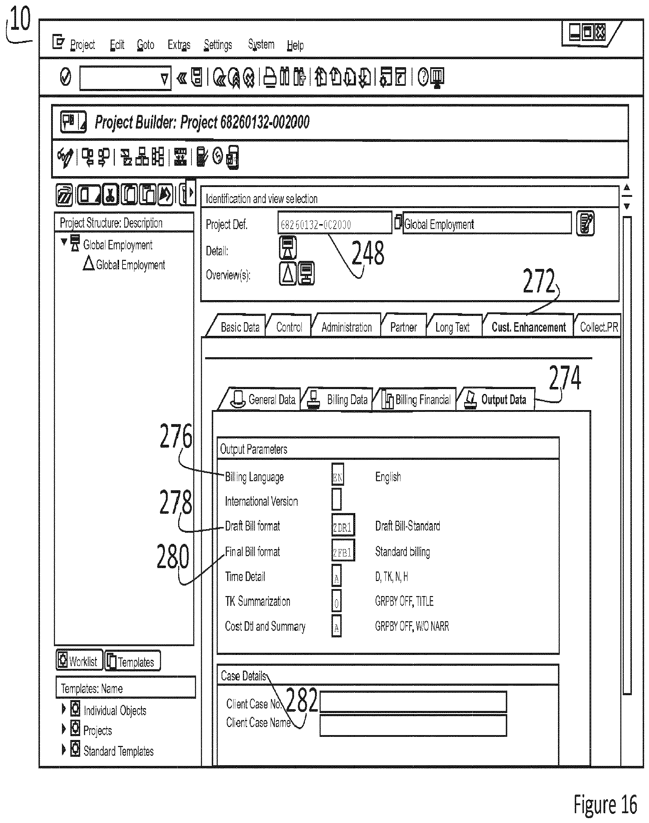

Figure 16 shows yet an additional drawing of a screen shot for the present inventive system, improved Billing and Collections system 10 which shows the project definition field 248 which will bring up the customer enhancement tab 272 which in turn brings up the output data selection tab 274 which shows the following fields: billing language 276, draft bill format 278, final bill format 280 and the Client case detail fields 282 where the System 10 will track the Client case number and name. The draft and final bill formats can be selected from a plurality of templates provided to the user thereof, all of which may be further customized by the user.

Although in the foregoing detailed description the present invention has been described by reference to various specific embodiments, it is to be understood that modifications and alterations in the structure and arrangement of those embodiments other than those specifically set forth herein may be achieved by those skilled in the art and that such modifications and alterations are to be considered as within the overall scope of this invention.

## Claims

1. A system configured to administer payment data corresponding to a client account, the system comprising:
a central processing unit (CPU) and data storage configured to perform the following:
store, in a first ledger of the data storage, the payment data for a received payment associated with the client account;
create a second ledger in the data storage upon determining that interest is due for the client account;
from the second ledger, pay or allocate taxes due, and then calculate a firm balance and an outstanding client balance, the firm balance allocating a remaining balance in the second ledger to at least one of hard costs, soft costs, professional fees, and profits to partners, the outstanding client balance used to determine partner profits to be split;
process the payment data from the first ledger according to an indicator associated with the client account when interest is not due for the client account, wherein a client trust account database receives the payment data from the data storage when the indicator does not exhibit an outstanding balance;
responsive to the indication of no outstanding balance, send an electronic communication to a billing entity requesting issuance of an interim bill to a client associated with the client account;
receive authorization from the billing entity to issue the interim bill;
issue the interim bill; and
subsequent to the issuance of the interim bill and after a predetermined number of days, automatically process the payment data wherein an accounts receivable database receives the payment data from the data storage.

2. In a central processing unit and data storage, a method to administer payment data corresponding to a client account, the method comprising:
storing by the central processing unit in a first ledger of the data storage, the payment data for a received payment associated with the client account;
creating a second ledger in the data storage upon determining that interest is due for the client account;
from the second ledger, paying or allocating taxes due, and then calculating a firm balance and an outstanding client balance, the firm balance allocating a remaining balance in the second ledger to at least one of hard costs, soft costs, professional fees, and profits to partners, the outstanding client balance used to determine partner profits to be split;
processing, by the central processing unit, the payment data from the first ledger according to an indicator associated with the client account when interest is not due for the client account, wherein a client trust account database receives the payment data from the data storage when the indicator does not exhibit an outstanding balance;
responsive to the indication of no outstanding balance, sending, by the central processing unit, an electronic communication to a billing entity requesting issuance of an interim bill to a client associated with the client account;
receiving, by the central processing unit, authorization from the billing entity to issue the interim bill;
issuing, by the central processing unit, the interim bill; and
subsequent to the issuance of the interim bill and after a predetermined number of days, automatically processing, by the central processing unit, the payment data wherein an accounts receivable database receives the payment data from the data storage.
